# EUROPÄISCHE PATENTSCHRIFT

(11) **EP 0 891 302 B1**
(45) Veröffentlichungstag und Bekanntmachung des Hinweises auf die Patenterteilung: **20.08.2003**
(21) Anmeldenummer: 97918062.7
(22) Anmeldetag: 02.04.1997
(51) Int. Cl.: C02F 3/02, C02F 3/10

(54) **VERFAHREN ZUM BIOLOGISCHEN REINIGEN VON ABWASSER**
PROCESS FOR THE BIOLOGICAL PURIFICATION OF WASTE WATER
PROCEDE D'EPURATION BIOLOGIQUE D'EAUX USEES

(30) Priorität: 03.04.1996 DE 19613397
(43) Veröffentlichungstag der Anmeldung: 20.01.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: TROESCH, Walter, D-70329 Stuttgart (DE)
(86) Internationale Anmeldenummer: DE9700671
(87) Internationale Veröffentlichungsnummer: WO97037941

(56) Entgegenhaltungen:
- WO-A-93/01138
- WO-A-97/28101
- DATABASE WPI Section Ch, Week 7902 Derwent Publications Ltd., London, GB; Class D15, AN 79-02741B XP002042325 & JP 53 135 167 A (TORAY IND INC) , 25.November 1978

## Beschreibung

Die vorliegende Erfindung betrifft das Gebiet der Abwasserbehandlung, und zwar insbesondere der Behandlung kommunaler und industrieller Abwässer.

Unter dem Aspekt, daß jede Form von Biomasse, auch organischer Abfall, kohlenstoffgebundene Solarenergie darstellt und daß sparsamer Umgang mit Energie oberstes Handlungsgebot für die Zukunft darstellt, ist die heutige Klärtechnik unter einem anderen Blickwinkel zu betrachten.

Der Istzustand im Klärwerksbereich stellt offene Abwasserbecken dar. Weil bei der Belüftung offener Becken eine Aerosolbildung nicht verhindert werden kann und auch flüchtige Abwasserinhaltsstoffe emitiert werden können, werden Klärwerke aufgrund daraus resultierender Geruchsbelästigungen oft weitab von Besiedlungen gebaut. Dies verursacht hohe Kosten (Stoff- und Energiekosten) für die Kanalverlegung. Gleichzeitig ist ein langer Kanal nichts anderes als ein Rohrbioreaktor, in welchem sehr unkontrolliert organische Substanz umgewandelt wird. Da im Kanalnetz ein Sauerstoffeintrag nicht verhindert werden kann, wird aerob mineralisiert, d.h. 50% der dort umgewandelten organischen Substanz geht in Form von technisch nicht nutzbarer Wärme verloren. Fakultative Anaerobier werden bei dieser Umwandlung vorherrschen, da nicht immer eine ausreichende Versorgung mit Sauerstoff gewährleistet ist. Sie sind, selbst wenn sie in der Vorklärung abgetrennt werden, im Faulturm nicht aufschließbar und stehen damit für eine Energiegewinnung nicht zur Verfügung. Sie landen ungenutzt auf der Deponie und verursachen dort möglicherweise Folgeprobleme.

Bei den Belebungsbecken erfolgt der Sauerstoffeintrag nicht analog zum CSB-Eintrag, und in flachen Becken ist die Luftsauerstoffausnutzung bezogen auf die eingetragene Leistung oft sehr gering. Im Vergleich zum Stand des Wissens wird hier massiv Energie vernichtet. Weiterhin ist die Konzentration der Biokatalysatoren, speziell der aktiven Organismen, sehr niedrig, so daß die Reaktionsgeschwindigkeit in den Belebungsanlagen extrem klein ist. Da aber in die Belebungsanlagen auch andere Feststoffe als aktive Biokatalysatoren gelangen, ist eine spezifische Erhöhung der Biokatalysatorkonzentration nicht möglich.

Die vorgeschaltete Denitrifizierung und die Rückführung eines Abwasserteilstroms nach Nitrifizierung in der Belebung in die anaerobe Denitrifizierung fördert die Entwicklung von fakultativen Anaerobiern im Sekundärschlamm. Es ist vorgeschlagen worden, durch Nachschalten eines Filters das Schlammalter zu erhöhen. Diese Betriebsweise zielt auf eine erhöhte Schlammzehrung, denn wegen einer durch wiederholte Veratmung von abgestorbener Biomasse verursachten Abnahme von organischer Substanz wird Energie in nicht nutzbare Wärme umgewandelt.

Die bevorzugt gebildeten fakultativen Anaerobier wiederum widerstehen der Faulung (s.o.). Sie stehen damit für ein stofflich/energetisches Recycling nicht mehr zur Verfügung. Zusätzlich wird durch die hohe hydraulische Rückführung das Volumen der Bioreaktoren erheblich erhöht.

Faultürme dienen der Stabilisierung von Klärschlämmen vor der Deponierung in der Landwirtschaft oder der Mülldeponie. Sie sind seitens ihrer Verweilzeit und ihrer Integration in Energienetze nicht als Nettoenergieproduktionsanlange ausgelegt. Die räumliche Entfernung der Kläranlage von Wärmeverbrauchern läßt eine effiziente Kraft-Wärme-Kopplung über Blockheizkraftwerke nicht zu. So wird im günstigsten Falle Faulgas verstromt und dient alleine der Reduktion des Elektroenergiebedarfs im Klärwerk. Nicht selten wird Faulgas abgefackelt. Die hohen Verweilzeiten in Faultürmen lassen nicht nur die den Faulprozeß katalysierenden Bakterien verhungern, sondern führen gelegentlich, wegen des ungünstigen Verhältnisses von volumetrischer Energieproduktion und Wärmeabstrahlung im Winter, zu additivem Energiebedarf bei der Thermostatisierung des Faulgutes.

Die industrielle Abwasserreinigung hat aus betriebswirtschaftlichen Gründen hier bessere Ansätze zur Problemlösung gefunden - allerdings sind die technischen Realisierungen erst im Laufe der letzten 10-15 Jahre erfolgt. Genannt seinen hier die Turm/Hochbiologien der Firmen Bayer AG und Hoechst AG oder die Experimente mit technischen Wirbelschichtreaktoren von Gist-Brocades. Gleichfalls erkannte zunächst die Industrie die ökonomischen Vorteile, die die anaerobe Abwasserreinigung gegenüber der aeroben Reinigung hat, und setzte speziell im Bereich der Lebensmittelindustrie Biogasreaktoren zur Abwasserreinigung ein.

Es sei ferner auf die US-Patentschrift 5,039,416 von Loew et al. hingewiesen, die sich mit der Behandlung industrieller Abwässer insbesondere unter dem Aspekt befaßt, daß solche Abwässer größere Anteile an nicht biologisch abbaubarem organischem Kohlenstoff enthalten. Loew et al. schlagen vor, andere Verfahrensstufen wie Adsorption oder Oxidation (zur Aufarbeitung von farbstoffhaltigen Abwässern und dergleichen) mit einer Membrantrennstufe zu kombinieren, lassen aber offen, welcher Natur das dabei anfallende Konzentrat oder Retentat ist und geben keinerlei Hinweise für dessen Weiterverarbeitung oder -verwertung, da die Aufbereitung organischer Inhaltstoffe dort keine Rolle spielt.

Es ist Aufgabe der vorliegenden Erfindung, die biologische Abwasserreinigung, insbesondere die von kommunalen oder industriellen Abwässern, so zu modifizieren, daß platzsparende Aggregate verwendet werden können, welche sich in der Nähe der Abwasserentstehungsquellen installieren lassen, während gleichzeitig die Energiebilanz des Gesamtverfahrens so günstig wie möglich ausfällt.

Die Aufgabe wird durch das Verfahren gemäß Anspruch 1 gelöst.

Vor dem Beginn der diversen möglichen organischen Fermentationsreaktionen, insbesondere aber vor Beginn des aeroben Abbaus, erfolgt eine quantitative Abtrennung der ungelösten Stoffe mit Hilfe eines Membrantrennverfahrens. Eine solche Abtrennung ist beispielsweise mit einer Mikrofiltrationsmembran, einer Nanofiltrationsmembran, einer Ultrafiltrationsmembran oder aber auch mit Umkehrosmose als letzter und ggf. einziger Trennstufe möglich. Ggf. können mehrere Trennstufen in eine sinnvoller Reihenfolge aufeinanderfolgen (von grob nach fein), z.B. eine Mikrofiltration vor einer Ultrafiltration. Vorgeschaltet werden können auch druckfreie Stufen wie eine Grobfiltration. Keramische Mikro- oder auch Ultrafiltrationsmembranen, die erst seit kurzer Zeit verfügbar sind, bieten für einen Einsatz als Trennmittel hohe transmembrane Flüsse, gute Regenerierbarkeit und Beständigkeit.

Die quantitative Abtrennung organischer Feststoffe und anderer ungelöster Stoffe, die im Stand der Technik, der Vorklärung in Form einer Sedimentation, nicht möglich war, bewirkt die Entstehung von zwei Stoffströmen, nämlich einem Konzentrat und einem Filtrat (außer bei der Umkehrosmose, bei welcher neben dem Konzentrat als "Diluat" Wasser anfällt). Das Konzentrat kann auf einen Feststoffgehalt von 3 bis 15 Gew.-% Trockensubstanz, bevorzugt 5 bis 12 Gew.-% und ganz besonders bevorzugt etwa 10 Gew.-% Trockensubstanz, eingestellt werden. In einer solchen Konzentration ist der Konzentratstrom besonders geeignet, direkt einer anaeroben Fermentation in einem Bioreaktor, beispielsweise einem Faulturm, zugeführt zu werden. Im als bevorzugt angegebenen Konzentrationsbereich hat sich die Methanisierung organischer Substanz als besonders geeignet erwiesen. Die erfindungsgemäßen Maßnahmen ermöglichen eine hohe Raumbelastung (also kleine Reaktoren) bei maximalen Abbaugrad und gekoppelt damit mit maximaler Energieausbeute.

Das Filtrat aus der Membrantrennstufe enthält nur gelöste organische Verbindungen, die die entsprechende Membran passieren können. Eine organische Feststoffanreicherung, die nicht aktiv sich vermehrende Biomasse ist, kann damit ausgeschlossen werden. Daher ist die aerobe Fermentation, die auf den Trennschritt folgt, nur gering belastet, da der größte Teil der organischen Masse der anaeroben Stufe zugeleitet wurde (maximales Energierecycling). Damit ist auch der Sauerstoffbedarf in der aeroben biologischen Stufe gegenüber dem Stand der Technik reduziert (geringer Energiebedarf). Alle für den Abbau des CSB nötigen Bakterien sind immer vorhanden, nur die aktiven vermehren sich spezifisch.

Als Belebungsstufe wird bevorzugt ein volldurchmischter geschlossener Bioreaktor mit hoher biologisch aktiver Katalysatorkonzentration gewählt. O₂-geregelte Bioreaktoren analog zur aktuellen Abbauleistung aktiver und in hoher Konzentration vorliegender Bakterien in schlanken hohen Reaktoren mit energiesparender O₂-Eintragstechnologie sind bevorzugt, da hierdurch erhebliche Mengen an Energie aus fossilen Quellen eingespart und gleichzeitig der Flächenbedarf für die Abwasserreinigung gesenkt werden kann. Um eine hohe Katalysatorkonzentration und damit hohe Produktivitätsraten zu erzielen, ist es empfehlenswert, den Bioreaktor (Fermenter) mit einem Zellrückhaltesystem auszustatten. Dies führt zu deutlich höheren Produktivitäten. Für die Zellrückführung wird ein Teilstrom aus dem Fermenter entnommen und im Kreislauf über ein Zellrückhaltesystem geführt. Dieses kann ebenfalls aus einem Membranfilter bestehen oder einen solchen umfassen. Aus dem Zellrückhaltesystem wird ein zellfreier Permeatstrom abgezogen. Das Retentat wird in den Fermenter zurückgeführt.

Daneben kann die Ausschleusung von Biokatalysatormaterial (ein sog. "Bleedstrom") vorgesehen sein. In einem solchen Falle wird die Konzentration der Biokatalysatoren über die Rückführrate und den Bleedstrom, also die Ausschleusungsrate von Biokatalysatoren aus dem Reaktor, gesteuert und im optimalen Bereich, bezogen auf die zufließende Wassermenge und die CSB-Belastung, geregelt. Hohe Biomassekonzentrationen ermöglichen kleinste Verweilzeiten, und die submerse Biomasse im Fermenter garantiert im Gegensatz zum Biofilm der Reaktoren, die derzeit meist eingesetzt werden, hohe Reinigungsraten, da Diffusionslimitierungen wie im Biofilm entfallen.

Die Konzentration der Biokatalysatoren, die im Fermenter erzielbar ist, kann bis zu mindestens 40 g/l betragen. Sogar höhere Konzentrationen sind möglich, obwohl dann die Versorgung mit Sauerstoff ungünstiger ist. Das Erreichen solch hoher Konzentrationen hat zur Folge, daß auch der ausgeschleuste Bleed-Strom einen Biomassengehalt von 40 g/l aufweisen kann. Dies ist ein Wert, der doppelt so hoch ist wie der bei Verwendung üblicher Reaktoren erzielte.

Der abgezogene Bleedstrom kann direkt ebenfalls einem anaeroben Fermenter, z.B. demselben Faulturm, dem das Konzentrat aus der ersten Membranfiltrationsstufe zugeführt wurde, zugeleitet werden.

Entgegen bisheriger Praxis können Klärschlämme bei sehr kurzer Verweilzeit zu sehr hohem Ausfaulgrad abgebaut werden, womit sie automatisch auch stabilisiert sind. Kleinere Reaktoren bei hoher volumetrischer Gasproduktion führen zu verringerten Abstrahlverlusten und erhöhter Nettoenergieabgabe. Stehen die nettoenergieerzeugenden Reaktoren, wie schon für die Klärreaktoren gefordert, in der Nähe der Ballungsräume, ist über eine effiziente Kraft-Wärme-Kopplung eine Verdreifachung der Nettoenergieabgabe möglich. Eine weitere Verbesserung wird durch die vorgenannte Erhöhung der Zulaufkonzentration an organischen Substanzen zum Bioreaktor erreicht, wodurch die Energieeffizienz noch weiter gesteigert werden kann.

Die vorgenannte Kombination von Verfahrensstufen ermöglicht weitere Ergänzungen: so kann beispielsweise das Filtrat des vorgeschalteten Membrantrennverfahrens zuerst von noch vorhandenen gelösten anorganischen Stoffen befreit werden, bevor es der aeroben Fermentation unterworfen wird. Eine solche Abtrennung kann beispielsweise durch Ausfällen mit Base (zur Entfernung beispielsweise von Calcium und Phosphat) oder durch Dampfstrippen (zum Entfernen von Ammoniak oder dergleichen) durchgeführt werden.

Der die aerobe Fermentation verlassende, zellfreie Permeatstrom ist hygienisch einwandfrei und kann direkt dem Vorfluter zugeführt werden. Die Verwendung von Fällungs- und Sedimentationshilfsmitteln ist nich erforderlich. Ggf. kann eine Nitrifizierung und/oder Denitrifizierung in üblicher Form nachgeschaltet werden.

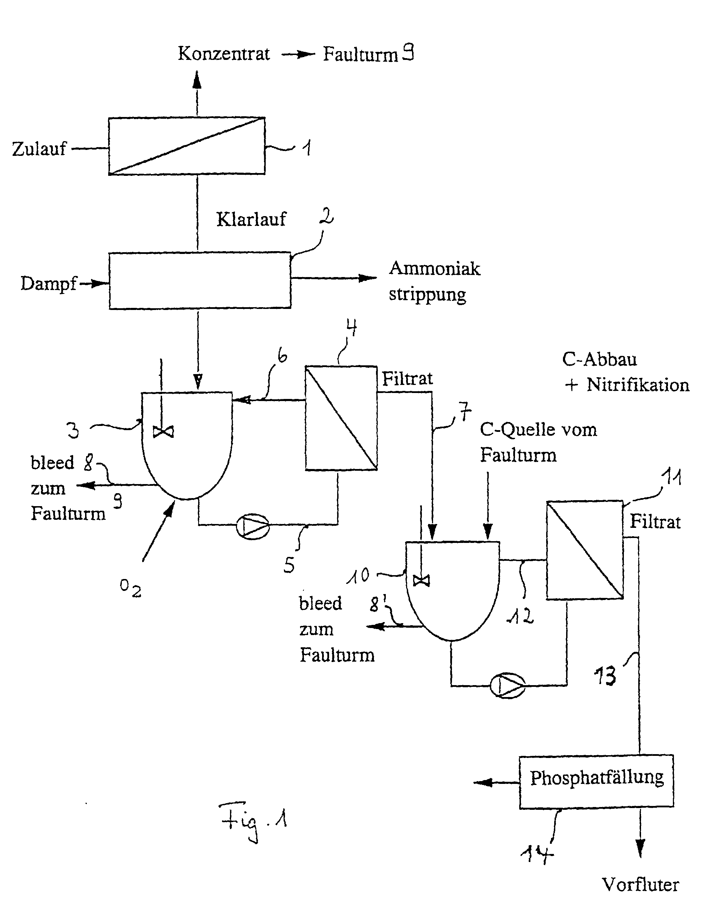

Nachstehend soll die vorliegende Erfindung sowie eine Reihe ergänzender möglicher Verfahrensschritte anhand der Schemazeichnung der **Figur 1** näher erläutert werden.

In **Figur 1** erkennt man den Zulauf eines Abwassers in ein Modul 1, in welchem die quantitative Abtrennung ungelöster Stoffe mit Hilfe eines Membrantrennverfahrens gemäß Anspruch 1 erfolgt. Das Konzentrat wird einem Faulturm 9 zugeführt. Der nur gelöste Verbindungen enthaltende Klarlauf wird in 2 zur Entfernung anorganischer Begleitstoffe einer Dampfstrippung unterworfen. Der auf diese Weise weiter gereinigte Klarlauf tritt nun in den Fermenter 3 ein, der durch die schematische Darstellung eines Rührers und der Zugabe von O₂ als voll durchmischter, geschlossener, O₂-geregelter Bioreaktor gekennzeichnet sein soll. Aus diesem kann über die Ableitung 5 ein Teilstrom aus dem Fermenter entnommen und in das Zellrückhaltesystem 4 eingebracht werden, dessen Retentatstrom 6 in den Fermenter zurückgeführt wird, während das Filtrat 7 weiteren Vorbehandlungsschritten zugeführt werden kann, bevor es in den Vorfluter gelangt. Aus dem Fermenter 3 kann ferner über die Leitung 8 ein Bleedstrom ausgeschleust werden, der im Faulturm 9 anaerob weiterbehandelt wird.

Das Filtrat 7 aus dem Zellrückhaltesystem 4 kann einer Nitrifikation/Denitrifikation zugeführt werden, die wie die aerobe Fermentation in einem volldurchmischten Reaktor 10 mit Zellrückführung 11 erfolgen kann. Auch hier kann der Bleedstrom 8' zum Faulturm 9 sowie die Rückführrate, mit der das Retentat über 12 in den Fermenter 10 zurückgeführt wird, so gesteuert und geregelt werden, daß der Reaktor 10 im optimalen Bereich arbeitet. Bevor das Filtrat 13 dem Vorfluter zugeleitet wird, können weitere anorganische Verunreinigungen abgetrennt werden; in der Schemazeichnung ist hier stellvertretend die Phosphatfällung 14 angegeben. Der Überstand bzw. das Filtrat dieser Stufe wird dann wie üblich entsorgt.

Vorteil der voranstehend beschriebenen Membranabtrennung ist, daß die gesamte Abwasserreinigung aufgrund der erfindungsgemäßen Maßnahmen in vollständig geschlossenen Systemen abläuft, einen nur geringen Raumbedarf hat, so daß die Abwasserbehandlung innerstädtisch installiert werden kann (was wiederum zu Einsparungen bei der Verlegung des Kanalnetzes führt), hygienisch unbedenklich ist, so daß der Vorfluter nicht oder nur minimal mit Keimen belastet wird, darüberhinaus flexibel ist und aufscaliert werden kann, so daß sie sich auch für sehr unterschiedliche Bedarfsmengen eignet. Das Verfahren ist außerdem unter Gesichtspunkten des Energiehaushaltes besonders vorteilhaft, da ein hoher Anteil der Zulauforganik direkt zur Verwertung in den Biogasreaktor geleitet wird.

## Patentansprüche

1. Verfahren zum biologischen Reinigen von Abwasser, **dadurch gekennzeichnet, daß** vor dem oder vor einem ersten aeroben biologischen Reinigungsschritt eine quantitative Abtrennung ungelöster Stoffe mit Hilfe eines Membrantrennverfahrens erfolgt, wobei
- der bei der Membrantrennung anfallende Filtratstrom einer aeroben Fermentation zugeführt wird und
- der bei der Membrantrennung anfallende Konzentratstrom einer anaeroben Fermentation zugeführt wird.

2. Verfahren nach Anspruch 1, **dadurch gekennzeichnet, daß** das Membrantrennverfahren ein- oder mehrstufig ist, wobei die einzige oder letzte Stufe auswählbar ist unter Filtrationen, nämlich Mikrofiltration, Nanofiltration und Ultrafiltration, sowie Umkehrosmose.

3. Verfahren nach Anspruch 1 oder 2, **dadurch gekennzeichnet, daß** der Feststoffgehalt des Konzentratstroms auf 3-15 Gew.-% eingestellt wird.

4. Verfahren nach einem der Ansprüche 1 bis 3, worin aus dem Filtratstrom vor der aeroben Fermentation anorganische Begleitstoffe entfernt werden.

5. Verfahren nach Anspruch 4, **dadurch gekennzeichnet, daß** die Entfernung anorganischer Begleitstoffe durch Ausfällen oder Dampfstrippen erfolgt.

6. Verfahren nach einem der voranstehenden Ansprüche, **dadurch gekennzeichnet, daß** der Filtratstrom in einem gelüfteten, volldurchmischten Fermenter aerob fermentiert wird, wobei die Zellen aus der den Fermenter verlassenden Fermentationsbrühe zum Nachreinigen mit Hilfe einer Filtrationseinheit zurückgehalten und teilweise oder ganz zurückgeführt werden.

7. Verfahren nach Anspruch 6, **dadurch gekennzeichnet, daß** die Konzentration der Biokatalysatoren im aeroben Fermenter über die Rückführrate sowie die Ausschleusungsrate von Biokatalysator aus dem Reaktor gesteuert und auf den optimalen Bereich eingeregelt wird.

8. Verfahren nach einem der Ansprüche 6 oder 7, **dadurch gekennzeichnet, daß** das Filtrat der einer Filtrationseinheit zugeführten Fermentationsbrühe, ggf. nach Nitrifizierung und/oder Denitrifizierung und/oder Phosphatfällung, einem Vorfluter zugeführt wird.

9. Verfahren nach einem voranstehenden der Ansprüche, **dadurch gekennzeichnet, daß** die aus dem aeroben Fermentationsreaktor ausgeschleusten Biokatalysatoren einem anaeroben Bioreaktor zugeführt werden.

10. Verfahren nach Anspruch 9, **dadurch gekennzeichnet, daß** der bei der Membrantrennung anfallende Konzentratstrom und die ausgeschleusten Biokatalysatoren demselben anaeroben Bioreaktor zugeführt werden.

## Claims

1. Method for the biological purification of waste water, **characterised in that**, before the or before a first aerobic biological purification step, a quantitative separation of undissolved materials is effected by means of a membrane separation method,
- the filtrate flow resulting during the membrane separation being supplied to an aerobic fermentation and
- the concentrate flow resulting during the membrane separation being supplied to an anaerobic fermentation.

2. Method according to claim 1, **characterised in that** the membrane separation method is single- or multi-stage, the single or last stage being able to be selected from filtrations, namely microfiltration, nanofiltration and ultrafiltration and also reverse osmosis.

3. Method according to claim 1 or 2, **characterised in that** the solid material content of the concentrate flow is adjusted to 3 - 15% by weight.

4. Method according to one of the claims 1 to 3, in which inorganic attendant materials are removed from the filtrate flow before the aerobic fermentation.

5. Method according to claim 4, **characterised in that** the removal of inorganic attendant materials is effected by means of precipitation or steam stripping.

6. Method according to one of the preceding claims, **characterised in that** the filtrate flow is aerobically fermented in an aerated, completely blended fermenter, the cells from the fermentation bath which are leaving the fermenter being retained to be re-purified by means of a filtration unit and being partially or completely recirculated.

7. Method according to claim 6, **characterised in that** the concentration of the biocatalysts in the aerobic fermenter is controlled via the recirculation rate and also the discharge rate of the biocatalyst from the reactor and is adjusted to the optimal range.

8. Method according to one of the claims 6 or 7, **characterised in that** the filtrate of the fermentation bath which is supplied to a filtration unit, if necessary after nitrification and/or denitrification and/or phosphate precipitation, is supplied to a main outfall.

9. Method according to one of the preceding claims, **characterised in that** the biocatalysts which are discharged from the aerobic fermentation reactor are supplied to an anaerobic bioreactor.

10. Method according to claim 9, **characterised in that** the concentrate flow which results during the membrane separation and the discharged biocatalysts are supplied to the same anaerobic bioreactor.

## Revendications

1. Procédé pour l'épuration biologique d'eaux usées,
**caractérisé en ce que**
avant l'étape ou avant une première étape d'épuration biologique aérobie, on effectue une séparation quantitative de substances non dissoutes au moyen d'un procédé de séparation sur membrane, dans lequel
- le flux de filtrat produit lors de la séparation sur membrane est envoyé à une fermentation aérobie et
- le flux de concentrat produit lors de la séparation sur membrane est envoyé à une fermentation anaérobie.

2. Procédé selon la revendication 1,
**caractérisé en ce que**
le procédé de séparation sur membrane est à un ou plusieurs étages, l'unique étage ou le dernier étage pouvant être choisi parmi différentes filtrations, à savoir la micro-filtration, la nano-filtration et l'ultrafiltration ainsi que l'osmose inverse.

3. Procédé selon la revendication 1 ou 2,
**caractérisé en ce que**
la teneur en solides du flux de concentrat est réglée sur 3-15% en poids.

4. Procédé selon une des revendications 1 à 3,
dans lequel
avant la fermentation aérobie, les matières secondaires inorganiques sont éliminées du flux de filtrat.

5. Procédé selon la revendication 4,
**caractérisé en ce que**
l'élimination des matières secondaires inorganiques s'effectue par précipitation ou par entraînement par la vapeur.

6. Procédé selon une des revendications précédentes,
**caractérisé en ce que**
l'on soumet le flux de filtrat à une fermentation aérobie dans un fermenteur ventilé, à brassage total, les cellules étant séparées du bouillon de fermentation qui quitte le fermenteur, et retenues pour la post-épuration, à l'aide d'une unité de filtration et étant recyclées en partie ou en totalité.

7. Procédé selon la revendication 6,
**caractérisé en ce que**
la concentration des biocatalyseurs dans le fermenteur aérobie est commandée, et est réglée sur l'intervalle optimal, en agissant sur le débit de recyclage ainsi que sur la vitesse d'éclusage du biocatalyseur hors du réacteur.

8. Procédé selon une des revendications 6 ou 7,
**caractérisé en ce que**
le filtrat du bouillon de fermentation envoyé à une unité de filtration est envoyé à un collecteur, éventuellement après nitrification et/ou dénitrification et/ou précipitation des phosphates.

9. Procédé selon une des revendications précédentes,
**caractérisé en ce que**
les biocatalyseurs éclusés du réacteur de fermentation aérobie sont envoyés à un bio-réacteur anaérobie.

10. Procédé selon la revendication 9,
**caractérisé en ce que**
le flux de concentrat produit lors de la séparation sur membrane et les biocatalyseurs éclusés sont envoyés au même bio-réacteur anaérobie.
